# EUROPÄISCHE PATENTANMELDUNG

(11) **EP 4 086 650 A1**
(43) Veröffentlichungstag der Anmeldung: **09.11.2022**
(21) Anmeldenummer: 21172360.6
(22) Anmeldetag: 06.05.2021
(51) Int. Cl.: G01S 3/02

(54) **VERFAHREN UND SYSTEM ZUR AUTOMATISCHEN VERMESSUNG UND/ODER GEWINNUNG VON PARAMETERN VON SYSTEMEN UND/ODER ANTENNEN**

(71) Anmelder: Plath Corporation GmbH, 20097 Hamburg (DE)
(72) Erfinder: SCHARFE, Nico, 20144 Hamburg (DE); WOLF, Franz, 22393 Hamburg (DE)
(74) Vertreter: Vossius & Partner Patentanwälte Rechtsanwälte mbB

(57) **Zusammenfassung**

Verfahren zur automatischen Vermessung und/oder Gewinnung von Parametern von Systemen und/oder Antennen für eine Bestimmung von Einfallsrichtungen von elektromagnetischen Wellen, insbesondere Peilsystemen und/oder Peilantennen unter Verwendung einer Sendeeinrichtung, die an einem unbemannten Luftfahrzeug angeordnet ist und die Signale sendet, mit den Schritten: a) Positionieren der Sendeeinrichtung unter Verwendung des unbemannten Luftfahrzeuges an einem vorgegebenen Ort relativ zu den Systemen und/oder den Antennen, b) Senden mindestens eines Signals durch die Sendeeinrichtung, das von den Systemen und/oder Antennen empfangbar ist, c) Empfangen des von der Sendeeinrichtung gesendeten Signals mit den Systemen und/oder Antennen für die Bestimmung von Einfallsrichtungen von elektromagnetischen Wellen, d) Ermitteln von Ist-Messwerten und/oder Gewinnen von Ist-Parametern aus dem empfangenen Signal jeweils in Beziehung zu dem vorgegebenen Ort mittels einer Messeinrichtung, und Wiederholen der Schritte a) bis d) für mindestens einen weiteren vorgegebenen Ort.

## Beschreibung

Die vorliegende Offenbarung betrifft Verfahren und Systeme zur automatischen Vermessung und/oder Gewinnung von Parametern von Systemen und/oder Antennen, insbesondere für eine Bestimmung von Einfallsrichtungen von elektromagnetischen Wellen, insbesondere Peilsystemen und/oder Peilantennen, unter Verwendung einer Sendeeinrichtung, die an einem unbemannten Luftfahrzeug angeordnet ist.

Peilantennen zur Bestimmung der Einfallsrichtung der elektromagnetischen Wellen können durch Einflüsse der Umgebung Peilfehler aufweisen. Beispielsweise werden Peilantennen für mobile Plattformen für sehr breite Frequenzbereiche benötigt. Aufgrund der kompakten Bauweise kann es frequenzabhängig zu Verkopplungen der Peilantenne mit der Plattform und somit zur Beeinflussung der Peilgenauigkeit kommen. Bei stationär aufgebauten Peilantennen unter realen Bedingungen kann es aufgrund von Umgebungsinhomogenitäten ebenfalls zur Beeinflussung zu Peilfehlern kommen.

Diese Abweichungen vom Sollwinkel müssen für das Erreichen von hoher Peilgenauigkeit möglichst festgestellt und korrigiert werden. Dies erfolgt durch die Funkbeschickung der Peilantenne. Hierzu wird die Peilantenne nach klassischen Verfahren mit einer Sendeanlage perimetrisch um 360° aus praktischen Gründen kreisförmig, äquidistant angeordneten Sollwinkeln vermessen.

Durch den Vergleich der gemessenen Azimute mit den Sollwinkeln kann die Fehlerkurve und die daraus resultierende Korrekturkurve gewonnen werden. Mit Hilfe abstimmbarer Sendeeinrichtung können diese Messungen pro Azimut für alle Frequenzen durchgeführt werden. Dieser Messwertesatz ist Bestandteil der Peilantenne und dient beim Peilbetrieb zur Korrektur der Peilwerte.

Bei räumlich ausgedehnten Peilantennen, z.B. Adcockantennen mit großer Antennenbasis im Kurzwellenbereich, wird die Sendeeinrichtung jeweils auf die Sollwinkelstandorte transportiert. Falls die Peilantenne auf eine Drehvorrichtung angebracht werden kann, wird die Antenne auf die Sollwinkel gedreht und die Vermessung kann mit Hilfe einer stationären Sendeeinrichtung erfolgen. Dies ist in der Regel bei kleineren, kompakteren Peilantennen im VHF - Frequenzbereich und höher möglich und dient insbesondere für Vorab - Messungen bevor die Antennen stationär auf hohe Masten oder auf mobile Plattformen angebracht werden. Die endgültig installierten Peilantennen lassen sich häufig vor Ort aufgrund schlechter Erreichbarkeit, Terrainprobleme o.ä. oder aufgrund von Gewichtsproblemen und Abmessungsproblemen der Plattform nur schwierig vermessen.

In diesen Fällen und insbesondere bei allen stationär aufgebauten Peilantennen wird die Vermessung dann durch den Ortswechsel der Sendeeinrichtung in der realen Umgebung auf die jeweiligen Sollwinkel erfolgen. Diese Messungen sind sehr zeitaufwendig und kostspielig. Dabei kommt es häufig zu ungeeigneten Sendestandorten verbunden mit standortabhängigen Ausbreitungsbedingungen aufgrund der Umgebungs- und Erdinhomogenitäten und Rückstrahler. Somit entstehen zusätzliche Messfehler, die sich als weitere Peilfehler bemerkbar machen, und nicht zu erfassen sind. Diese Effekte sind vorrangig durch die Anbringungsmöglichkeiten der Sendeantenne der Sendeeinrichtung in relativ geringer Höhe oder nur auf dem Boden und somit durch unerwünschte, ortsabhängige Reflexionen der realen Umgebung und durch den jeweils unterschiedlichen Einfluss der genannten Inhomogenitäten beim Standortwechsel auf einen anderen Sollwinkel des Senders verursacht.

Probleme bereitet auch die Vermessung der Peilanlagen, die auf Schiffen installiert werden. Idealerweise sollen Schiffe auf offener See, ohne die Rückstrahlwirkung der Uferanlagen vermessen werden. Ein Drehen des Schiffes auf die Sollwinkel oder das Herumfahren der Sendeanlage mit der Sendeantenne auf einem Boot um das Schiff lässt sich in der Praxis schwierig realisieren. Beim Senden vom Ufer können meist nur wenige Azimute vermessen werden; hierbei entstehen die obengenannten Probleme durch den Rückstrahler-Einfluss der Uferanlagen. Falls das Schiff auch nur in der Ufernähe positioniert werden kann, steigt der Messfehler erheblich.

Der vorliegenden Offenbarung liegt die Aufgabe zugrunde, Verfahren und Systeme bereitzustellen, die ein verbessertes Messsystem und dadurch eine Reduzierung der Messfehler und des Zeitaufwandes aufweisen.

Diese Aufgabe wird mit den Merkmalen der unabhängigen Patentansprüche gelöst. Die abhängigen Patentansprüche beziehen sich auf weitere Aspekte.

Gemäß einem Aspekt der vorliegenden Offenbarung wird ein Verfahren zur automatischen Vermessung und/oder Gewinnung von Parametern von Systemen und/oder

Antennen für eine Bestimmung von Einfallsrichtungen von elektromagnetischen Wellen, insbesondere Peilsystemen und/oder Peilantennen, unter Verwendung einer Sendeeinrichtung, die an einem unbemannten Luftfahrzeug angeordnet ist und die Signale sendet bereitgestellt, mit den Schritten: a) Positionieren der Sendeeinrichtung unter Verwendung des unbemannten Luftfahrzeuges an einem vorgegebenen Ort relativ zu den Systemen und/oder den Antennen, b) Senden mindestens eines Signals durch die Sendeeinrichtung, das von den Systemen und/oder Antennen empfangbar ist, c) Empfangen des von der Sendeeinrichtung gesendeten Signals mit den Systemen und/oder Antennen für die Bestimmung von Einfallsrichtungen von elektromagnetischen Wellen, d) Ermitteln von Ist-Messwerten und/oder Gewinnen von Ist-Parametern aus dem empfangenen Signal jeweils in Beziehung zu dem vorgegebenen Ort mittels einer Messeinrichtung, und Wiederholen der Schritte a) bis d) für mindestens einen weiteren vorgegebenen Ort.

Verschiedene Ausführungsformen können vorzugsweise die folgenden Merkmale implementieren.

Vorzugsweise weist das Verfahren einen Schritt zum Bestimmen des vorgegebenen Ortes, vorzugsweise einer absoluten oder relativen Position der Sendeeinrichtung auf, insbesondere einer mit der Sendeeinrichtung verbundenen Sendeantenne, sodass an diesem Ort optimale Abstrahleigenschaften der Sendeeinrichtung zu den Systemen und/oder Antennen und/oder optimale Empfangsbedingungen für die Bestimmung von Einfallsrichtungen von elektromagnetischen Wellen vorhanden sind.

Die absolute Position wird vorzugsweise durch Ortskoordinaten, insbesondere GPS-Daten, angegeben.

Die relative Position wird vorzugsweise durch die Richtung und Entfernung zu den Systemen und/oder Antennen für die Bestimmung von Einfallsrichtungen von elektromagnetischen Wellen angegeben.

Die Ist-Messwerte weisen vorzugsweise mindestens eine der folgenden Größen auf: eine Einfallsrichtung, insbesondere Azimut und/oder Elevation und/oder Antennenempfindlichkeitsdaten, insbesondere eine Empfangsfeldstärke der elektromagnetischen Wellen des empfangenen Signals.

Der Schritt zum Positionieren der Sendeeinrichtung weist vorzugsweise die weiteren Schritte auf: Senden von Steuerdaten durch eine Steuereinrichtung, die mit den Systemen und/oder den Antennen verbunden ist, an das unbemannte Luftfahrzeug, und Bewegen der Sendeeinrichtung mittels des unbemannten Luftfahrzeuges anhand der Steuerdaten zu dem vorgegebenen Ort.

Vorzugsweise weist das Verfahren den folgenden weiteren Schritt auf: Bereitstellen der Steuerdaten durch die Messeinrichtung an die Steuereinrichtung basierend auf den Ist-Messwerten und/oder Ist-Parametern.

Vorzugsweise weist das Verfahren die folgenden weiteren Schritte auf: Vergleichen der Ist-Messwerte mit Soll-Messwerten und/oder Vergleichen der Ist-Parameter mit Soll-Parametern für den vorgegebenen Ort der Sendeeinrichtung und dem gesendeten Signal, und Bestimmen von Funkbeschickungswerten, insbesondere Korrekturwerten und Kalibrierungskurven zum Korrigieren von Abweichungen der Ist-Messwerte von den Soll-Messwerten.

Das gesendete Signal weist vorzugsweise eine Anzahl von Spektrallinien auf, die vorzugsweise einen definierten Frequenzabstand aufweisen.

Gemäß einem weiteren Aspekt der vorliegenden Offenbarung wird ein System, insbesondere zum Durchführen eines Verfahrens wie vorstehend beschrieben, auf. Das System weist auf: eine Sendeeinrichtung mit mindestens einer Sendeantenne, die an einem unbemannten Luftfahrtzeug, bevorzugt an einer Flugdrohne angeordnet sind, wobei die Sendeeinrichtung bzw. die Sendeantenne an einem vorgegebenen Ort relativ zu Systemen und/oder Antennen für eine Bestimmung von Einfallsrichtungen von elektromagnetischen Wellen, insbesondere Peilsystemen und/oder Peilantennen positionierbar ist, eine Messeinrichtung zum Ermitteln von Ist-Messwerten und/oder Gewinnen von Ist-Parametern aus dem empfangenen Signal jeweils in Beziehung zu dem vorgegebenen Ort und eine Recheneinrichtung zum Auswerten der Ist-Messwerte und/oder der Ist-Parameter.

Verschiedene Ausführungsformen können vorzugsweise die folgenden Merkmale implementieren.

Die Recheneinrichtung ist vorzugsweise zum Vergleichen der Ist-Messwerte mit Soll-Messwerten und/oder Vergleichen der Ist-Parameter mit Soll-Parametern für den vorgegebenen Ort der Sendeeinrichtung und dem gesendeten Signal konfiguriert, und insbesondere zum Ermitteln von Peilantennendaten und zum Berechnen von Peilantennenparametern der Peilsysteme und der Peilantennen.

Die Sendeeinrichtung weist vorzugsweise einen in der Frequenz abstimmbaren Signalgenerator oder vorzugsweise einen Eichmarkengeber in Verbindung mit einem Breitbandempfänger auf.

Ausführungsformen der vorliegenden Offenbarung betreffen ein Verfahren zur automatischen Gewinnung der Parameter insbesondere der Korrekturwerte, Funkbeschickungswerte, Kalibrierungskurven und Empfindlichkeitswerte von Peilantennen und Antennen für Bestimmung von Einfallsrichtungen der elektromagnetischen Wellen mittels einer Sendeeinrichtung, wobei diese Sendeeinrichtung zur Steigerung der Verfahrensgenauigkeit von peiltechnisch optimalen Standorten senden kann.

In einer Ausführungsform, erfolgt die Bestimmung der Parameter mit einem Messsystem, bestehend aus einer ferngesteuerten Sendeeinrichtung mit Sendeantenne angebracht auf einem unbemannten Luftfahrzeug vorzugsweise einer Flugdrohne und aus einer Messeinrichtung bestehend aus einem Peilempfänger und einer Recheneinrichtung zur Auswertung der Peilantennendaten und Gewinnung der Parameter und aus einer Fernsteuerung zum Bedienen der Drohne.

In einer Ausführungsform wird als Träger der Sendeeinrichtung eine fliegende Plattform, vorzugsweise eine Flugdrohne, verwendet. Der heutige technische Stand der Drohnenentwicklung ermöglicht einen sehr schnellen Ortswechsel der Drohne, Senden aus verschiedenen, auch langen Distanzen, zum Messobjekt, das Tragen von relativ hohen Lasten, zentimetergenaue Positionierung mittels Zusatzortungsmethoden wie DGPS-GPS, GPS-RTK oder ähnlicher Verfahren. Durch die Höhen- und Entfernungsflexibilität können optimale Sendestandorte erreicht werden und es kann dadurch der Einfluss der Erd-Inhomogenitäten ausgeschlossen und der restlichen Rückstrahler minimiert werden und die Messgenauigkeit erhöht werden.

Dabei befindet sich die Drohnenentwicklung ständig im Fluss und bringt laufende Verbesserungen hinsichtlich der Flugdauer, maximaler Last und sonstiger Parameter.

Nachfolgend werden die vorstehend genannten Aspekte anhand von Ausführungsbeispielen und der Figuren näher erläutert. Es zeigen:
Fig. 1 zeigt eine schematische Darstellung eines Messsystems gemäß einer Ausführungsform der Offenbarung,
Fig. 2 zeigt eine schematische Darstellung einer Drohne gemäß einer Ausführungsform der Offenbarung,
Fig. 3 zeigt eine schematische Darstellung eines Messsystems gemäß einer weiteren Ausführungsform der Offenbarung, und
Fig. 4 zeigt einen Ablaufplan eines Verfahrens gemäß einer weiteren Ausführungsform der Offenbarung.

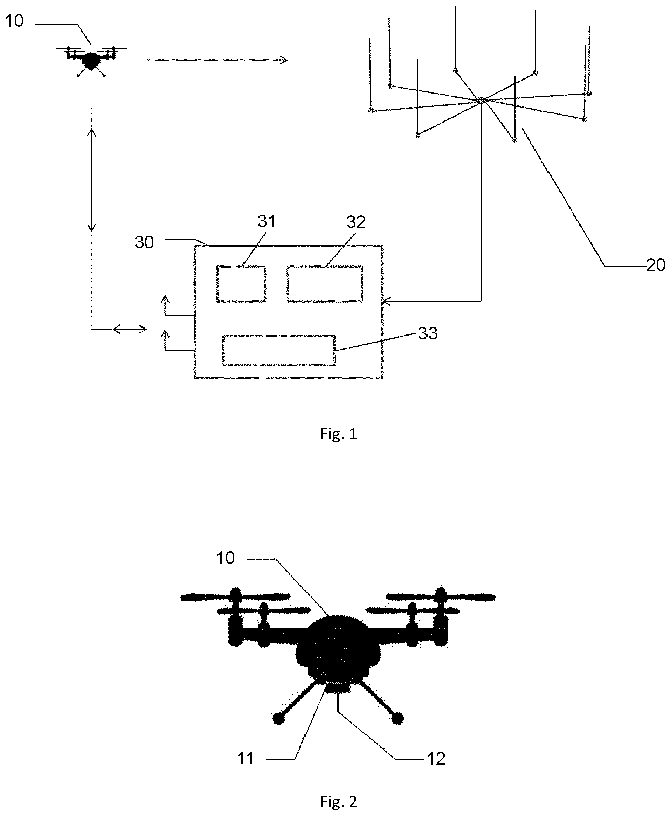

Fig. 1 zeigt prinzipiell das Messsystem mit dem Testobjekt 20 (Peilantenne 20). Das System weist eine Drohne 10 auf. Die Drohne 10 weist eine Sendeeinrichtung 11 mit Sendeantenne 12 auf, welche in Fig. 2 gezeigt sind. Fig. 1 zeigt ferner eine Messeinrichtung 30 mit einem Peilempfänger 31, einer Recheneinrichtung 32 und einer Sendeeinrichtung 33 für die Drohnenbedienung im Folgenden auch als Fernsteuerung 33 benannt.

Die Recheneinrichtung 32 führt mit entsprechenden Teilprogrammen folgende Aktionen durch: Steuerung der Sendeeinrichtung 11 mit Sendeantenne 12 der Drohne 10, Verwaltung der anzufliegenden Standorte der Drohne 10 und deren Ausgabe auf die Fernsteuerung 33 der Drohne 10, synchrones Kommandieren der Frequenzbereiche der Sendeeinrichtung 11 und des Peilempfängers 31, Speicherung der durch den Peilempfänger 31 gemessenen Peilwinkel, Vergleich der Werte der gemessenen Peilwinkel mit den entsprechenden Sollwinkeln, Berechnung der Funkbeschickungswerte und als Ergebnis Bestimmung der Korrekturtabellen der Peilantenne 20.

Die Recheneinheit 32 ist mit drahtlosen Interfaces für die Steuerung der Sendeeinrichtung 11 ausgestattet; die Steuerung der Drohne 10 erfolgt über die dazu gehörige Fernsteuerung 33, die jedoch von der Recheneinrichtung 32 kommandiert wird. Die Drohnenseite ist mit entsprechenden drahtlosen Schnittstellen ausgestattet.

Gemäß der Offenbarung ermöglicht das Verfahren einen vollautomatischen Messablauf. In einer Ausführungsform läuft der Messablauf prinzipiell folgendermaßen ab: Vor dem Start der Messung werden die Anfangsbedingungen des Messzyklus eingegeben. Insbesondere werden die zu messenden Frequenzbereiche für das Kommandieren der Sendeeinrichtung 11 und des Peilempfängers 31 angegeben und es werden die anzufliegenden Standorte der Drohne 10 bestimmt.

Mit derart vorprogrammierter Recheneinheit 32 wird der Messzyklus gestartet, wobei die einzelnen Sendestandorte, insbesondere Sollwinkel angeflogen werden, jeweils das Sendeprogramm initiiert und mit dem Peilempfänger 31 auf allen Frequenzen die Ist - Peilwinkel gemessen.

Nach dem Messzyklusende werden die Funkbeschickungswerte, Korrekturwerte berechnet und sind im Peilbetrieb für eine automatische Korrektur der Peilwerte verfügbar.

Ein Vorteil des Verfahrens der Offenbarung ist die aktive Ausnutzung der Peilqualitätswerte für die Akzeptanz der Messwerte an einem Standort unmittelbar während des Echtzeit-Messprozesses. Die modernen, mehrkanaligen Breitbandpeiler liefern neben dem Peilwinkel auch Signal-Peilqualitätswerte in der Form von Peilwinkelvarianz, empfangener Signalamplitude, S/N-Verhältnisse und des Maßes für Signalreflexion. Beim Überschreiten der maximal festgelegten Grenzen der Peilqualitätswerte werden die dazugehörenden Peilwerte verworfen und der Sendestandort für eine Vermessung als ungeeignet gekennzeichnet; währenddessen wird vorzugsweise eine Programmroutine aktiviert, mit der in dem betroffenen Winkelsegment vorzugsweise sofort nach Sendestandorten mit zulässiger Peilwertqualität gesucht wird, bis ein Ersatz-Sendestandort mit gültiger Messung festgestellt wird.

Die Anfangsbedingungen für diese Programmroutine zum Auffinden eines Ersatz-Sendestandorts, wie die Grenzen der Winkelsegmentgröße, die maximal erlaubten Entfernungsabweichung von der vorgegebenen Flugbahn, die Anzahl und die Größe der Schritte für angeflogene Sendestandorte im Winkelsegment werden ebenfalls vorab programmiert.

Ein weiterer Vorteil des Verfahrens der Offenbarung ist, dass der Messablauf durch diese Vorgehensweise und aufgrund der hohen Bewegungsflexibilität der Sendeeinrichtung 11 nicht unterbrochen wird, zeitlich kaum länger dauert, und die erwarteten Ergebnisse geliefert werden. Mit klassischer Methode wäre diese Vermessung sehr langwierig bzw. aufgrund der Aussendung des Messsignals aus ungünstigen Standorten, geringer Höhe o.ä. gar nicht realisierbar.

Aufgrund dieser Verfahrenseigenschaften kann die Flugbahn der Drohne 10 relativ einfach vorab programmiert werden. Es kann eine kreisförmige Flugbahn mit dem Mittelpunkt am Ort des Messobjektes 20 (Peilantenne 20) mit Messpunkten mit gleichem Winkelschritt vorprogrammiert werden. Während des Messprozesses kommt es gemäß der Verfahrensschritte adaptiv zum Auffinden optimaler Messpunkte. Mit anderen Worten werden optimale Sendestandorte mit bestimmter Elevation und Azimut aufgefunden.

Das Verfahren ist aufgrund dieser Flexibilität auch für eine schnelle, kostengünstige Überprüfung der Peilantennenanlage - Zustandes ohne umfangreiche Auswertungen geeignet.

Aufgrund der Möglichkeit der Vermessung der Peilantenne mit der Sendeeinrichtung in verschiedenen Höhen oder auch während eines Überfluges besteht die Möglichkeit das Verhalten der Peilantenne bei verschiedenen Höhenwinkeln und Distanzen zu messen. Somit können weitere Datensätze in Abhängigkeit vom Höhenwinkel bzw. der Elevation erstellt werden.

Da das Messverfahren gemäß der Offenbarung während des Messzyklus auch die empfangenen Amplitudenwerte der Peilantennen 20 zu registrieren erlaubt, besteht die Möglichkeit der Bestimmung der Empfindlichkeitswerte der Peilantenne 20. Hierzu wird vorzugsweise lediglich ein in der Nähe des Messobjektes 20 (Peilantenne 20) stehendes Feldstärkemessgerät zusätzlich benutzt, das ebenfalls von der Recheneinrichtung 32 mit der Sendeeinrichtung 11 frequenzmäßig synchron kommandiert und ausgelesen werden kann. Dessen Feldstärkewerte dienen mit der gemessenen Amplitude zur Berechnung der Antennenempfindlichkeit.

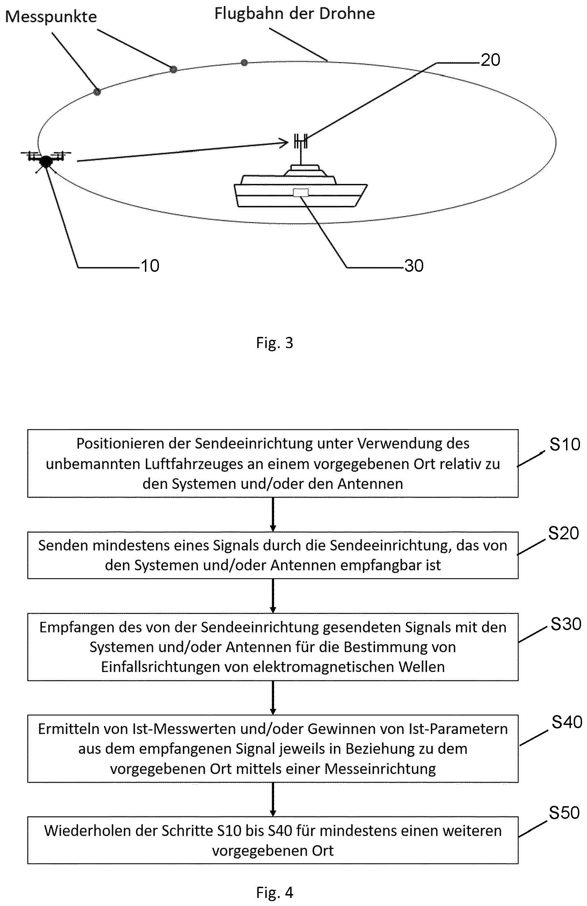

Die Vermessung der Peilantenne 20 erfolgt mit der Sendeantenne 12 der Sendeeinrichtung 11 vorzugsweise mit gleicher Polarisationsausrichtung, die die Peilantenne 20 besitzt, beispielsweise in Fig. 1 und 3 mit Vertikalpolarisation.

Als Sendeantennen 12 werden je nach Eignung für die zu messenden Frequenzbereiche entweder Rundstrahlantennen in Form von senkrechten Breitbandmonopolen, Dipolen oder breitbandige Richtantennen wie bsp. logper-Antennen (logarithmisch-periodische Antennen) verwendet. Der Vorteil einer Rundstrahlantenne ist, dass die Drohne 10 beim Standortwechsel nicht unbedingt definiert zum Messobjekt 20 gedreht werden muss. Dagegen werden bei der Benutzung von Richtantennen diese mit der Drohne 10 definiert zum Messobjekt 20 ins Abstrahlmaximum gedreht (hier um die vertikale Achse herum).

Als Sendeeinrichtung 11 wird ein in der Frequenz abstimmbarer Sender benutzt. In einer weiteren Ausführungsform besteht die Möglichkeit anstelle der abstimmbaren Sendeeinrichtung 11 einen Eichmarkengeber, z.B. auf dem Prinzip eines Kammgenerators als Sender zu verwenden. Der Eichmarkengeber kann auch als Kammgenerator oder Lattenzaungenerator bezeichnet werden und ist beispielsweise unter https://dd3ah.de/eichmarkengeber/ beschrieben. Diese Generatoren erzeugen breitbandig ein diskretes Spektrum von Signalen im definierten Frequenz-Abstand. Auf diese Weise ist es beispielsweise möglich den gesamten Kurzwellenbereich zu überstreichen, ohne dass die Sendeeinrichtung 11 kommandiert werden muss. Insbesondere in einer Kombination mit einem Breitbandpeiler in der Messeinrichtung 30 stehen alle Peilwerte auf allen gesendeten Spektrallinien gleichzeitigt bereit und können ausgelesen werden. Dieses vereinfachte Verfahren ist insbesondere für eine schnelle Überprüfung von Peilantennen 20 vorteilhaft. Durch das kleine Gewicht des Eichmarkengebers können Drohnen 10 für kleinere Traglasten verwendet werden.

In einer Ausführungsform wird das Verfahren zur Vermessung von Peilantennen 20 auf Schiffen praktisch in gleicher Weise, wie bei den vorstehend beschriebenen stationären Anlagen durchgeführt (Fig. 3). Wie in Fig. 3 gezeigt, ist hierbei die Messeinrichtung 30 auf dem Schiff installiert und direkt mit der Peilantenne 20 verbunden.

Bei einer Vermessung der Peilanlage 20 von Schiffen besteht aufgrund der frei beweglichen, auf der Drohne 10 installierten Sendeeinrichtung die Möglichkeit einer sehr genauen Funkbeschickung, die mit bisher bekannten Methoden nicht möglich ist.

Fig. 3 zeigt zusätzlich eine beispielhafte Flugbahn der Drohne 10 um das Schiff, das die Peilantenne 20 und die Messeinrichtung 30 aufweist. Ferner sind beispielhafte Messpunkte auf der Flugbahn der Drohne 10 schematisch angedeutet.

Gemäß verschiedener Ausführungsformen, wird ein System bereitgestellt, insbesondere zum Durchführen eines Verfahrens wie hier beschrieben. Das System weist auf: eine Sendeeinrichtung 11 mit mindestens einer Sendeantenne 12, die an einem unbemannten Luftfahrtzeug 10, bevorzugt an einer Flugdrohne 10 angeordnet sind, wobei die Sendeeinrichtung 11 bzw. die Sendeantenne 12 an einem vorgegebenen Ort relativ zu Systemen und/oder Antennen 20 für eine Bestimmung von Einfallsrichtungen von elektromagnetischen Wellen, insbesondere Peilsystemen und/oder Peilantennen 20 positionierbar ist, eine Messeinrichtung 30 zum Ermitteln von Ist-Messwerten und/oder Gewinnen von Ist-Parametern aus dem empfangenen Signal jeweils in Beziehung zu dem vorgegebenen Ort und eine Recheneinrichtung 32 zum Auswerten der Ist-Messwerte und/oder der Ist-Parameter.

In einer Ausführungsform ist die Recheneinrichtung 32 zum Vergleichen der Ist-Messwerte mit Soll-Messwerten und/oder Vergleichen der Ist-Parameter mit Soll-Parametern für den vorgegebenen Ort der Sendeeinrichtung 11 und dem gesendeten Signal konfiguriert, und insbesondere zum Ermitteln von Peilantennendaten und zum Berechnen von Peilantennenparametern der Peilsysteme und der Peilantennen 20.

In einer Ausführungsform weist die Sendeeinrichtung 11 einen in der Frequenz abstimmbaren Signalgenerator oder einen Eichmarkengeber in Verbindung mit einem Breitbandempfänger auf.

Fig. 4 zeigt einen Ablaufplan eines Verfahrens gemäß einer weiteren Ausführungsform der Offenbarung. Fig. 4 zeigt insbesondere ein Verfahren zur automatischen Vermessung und/oder Gewinnung von Parametern von Systemen und/oder Antennen 20 für eine Bestimmung von Einfallsrichtungen von elektromagnetischen Wellen, insbesondere Peilsystemen und/oder Peilantennen 20, unter Verwendung einer Sendeeinrichtung 11, die an einem unbemannten Luftfahrzeug 10 angeordnet ist und die Signale sendet. Das Verfahren weist die folgenden Schritte auf.

In Schritt S10: Positionieren der Sendeeinrichtung 11 unter Verwendung des unbemannten Luftfahrzeuges 10 an einem vorgegebenen Ort relativ zu den Systemen und/oder den Antennen 20.

In Schritt S20: Senden mindestens eines Signals durch die Sendeeinrichtung 11, das von den Systemen und/oder Antennen 20 empfangbar ist.

In Schritt S30: Empfangen des von der Sendeeinrichtung 11 gesendeten Signals mit den Systemen und/oder Antennen 20 für die Bestimmung von Einfallsrichtungen von elektromagnetischen Wellen.

In Schritt S40: Ermitteln von Ist-Messwerten und/oder Gewinnen von Ist-Parametern aus dem empfangenen Signal jeweils in Beziehung zu dem vorgegebenen Ort mittels einer Messeinrichtung 30.

In Schritt S50: Wiederholen der Schritte S10 bis S40 für mindestens einen weiteren vorgegebenen Ort.

In einer Ausführungsform weist das Verfahren ferner einen Schritt zum Bestimmen des vorgegebenen Ortes, vorzugsweise einer absoluten oder relativen Position der Sendeeinrichtung 11 auf, insbesondere einer mit der Sendeeinrichtung 11 verbundenen Sendeantenne 12, sodass an diesem Ort optimale Abstrahleigenschaften der Sendeeinrichtung 11 zu den Systemen und/oder Antennen 20 und/oder optimale Empfangsbedingungen für die Bestimmung von Einfallsrichtungen von elektromagnetischen Wellen vorhanden sind.

In einer Ausführungsform wird die absolute Position durch Ortskoordinaten, insbesondere GPS-Daten, angegeben.

In einer Ausführungsform wird die relative Position durch die Richtung und Entfernung zu den Systemen und/oder Antennen 20 für die Bestimmung von Einfallsrichtungen von elektromagnetischen Wellen angegeben.

In einer Ausführungsform weisen die Ist-Messwerte mindestens eine der folgenden Größen auf: eine Einfallsrichtung, insbesondere Azimut und/oder Elevation und/oder Antennenempfindlichkeitsdaten, insbesondere eine Empfangsfeldstärke der elektromagnetischen Wellen des empfangenen Signals.

In einer Ausführungsform weist der Schritt S10 zum Positionieren der Sendeeinrichtung 11 die weiteren Schritte auf: Senden von Steuerdaten durch eine Steuereinrichtung 33, die mit den Systemen und/oder den Antennen 20 verbunden ist, an das unbemannte Luftfahrzeug 10, und Bewegen der Sendeeinrichtung 11 mittels des unbemannten Luftfahrzeuges 10 anhand der Steuerdaten zu dem vorgegebenen Ort.

In einer Ausführungsform weist das Verfahren den folgenden weiteren Schritt auf: Bereitstellen der Steuerdaten durch die Messeinrichtung 30 an die Steuereinrichtung 33 basierend auf den Ist-Messwerten und/oder Ist-Parametern.

In einer Ausführungsform weist das Verfahren die folgenden weiteren Schritte auf: Vergleichen der Ist-Messwerte mit Soll-Messwerten und/oder Vergleichen der Ist-Parameter mit Soll-Parametern für den vorgegebenen Ort der Sendeeinrichtung 11 und dem gesendeten Signal, und Bestimmen von Funkbeschickungswerten, insbesondere Korrekturwerten und Kalibrierungskurven zum Korrigieren von Abweichungen der Ist-Messwerte von den Soll-Messwerten.

In einer Ausführungsform weist das gesendete Signal eine Anzahl von Spektrallinien auf.

In einer Ausführungsform weisen die Spektrallinien einen definierten Frequenzabstand auf.

Obwohl die Offenbarung mittels der Figuren und der zugehörigen Beschreibung dargestellt und detailliert beschrieben ist, sind diese Darstellung und diese detaillierte Beschreibung illustrativ und beispielhaft zu verstehen und nicht als die Offenbarung einschränkend. Es versteht sich, dass Fachleute Änderungen und Abwandlungen machen können, ohne den Umfang der folgenden Ansprüche zu verlassen. Insbesondere umfasst die Offenbarung ebenfalls Ausführungsformen mit jeglicher Kombination von Merkmalen, die vorstehend zu verschiedenen Aspekten und/oder Ausführungsformen genannt oder gezeigt sind.

Die Offenbarung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Verfahren zur automatischen Vermessung und/oder Gewinnung von Parametern von Systemen und/oder Antennen (20) für eine Bestimmung von Einfallsrichtungen von elektromagnetischen Wellen, insbesondere Peilsystemen und/oder Peilantennen (20), unter Verwendung einer Sendeeinrichtung (11), die an einem unbemannten Luftfahrzeug (10) angeordnet ist und die Signale sendet, mit den Schritten:
a) Positionieren der Sendeeinrichtung (11) unter Verwendung des unbemannten Luftfahrzeuges (10) an einem vorgegebenen Ort relativ zu den Systemen und/oder den Antennen (20),
b) Senden mindestens eines Signals durch die Sendeeinrichtung (11), das von den Systemen und/oder Antennen (20) empfangbar ist,
c) Empfangen des von der Sendeeinrichtung (11) gesendeten Signals mit den Systemen und/oder Antennen (20) für die Bestimmung von Einfallsrichtungen von elektromagnetischen Wellen,
d) Ermitteln von Ist-Messwerten und/oder Gewinnen von Ist-Parametern aus dem empfangenen Signal jeweils in Beziehung zu dem vorgegebenen Ort mittels einer Messeinrichtung (30), und
Wiederholen der Schritte a) bis d) für mindestens einen weiteren vorgegebenen Ort.

2. Verfahren nach Anspruch 1, mit einem Schritt zum Bestimmen des vorgegebenen Ortes, vorzugsweise einer absoluten oder relativen Position der Sendeeinrichtung (11), insbesondere einer mit der Sendeeinrichtung (11) verbundenen Sendeantenne (12), sodass an diesem Ort optimale Abstrahleigenschaften der Sendeeinrichtung (11) zu den Systemen und/oder Antennen (20) und/oder optimale Empfangsbedingungen für die Bestimmung von Einfallsrichtungen von elektromagnetischen Wellen vorhanden sind,
wobei die absolute Position vorzugsweise durch Ortskoordinaten, insbesondere GPS-Daten, angegeben wird und die relative Position vorzugsweise durch die Richtung und Entfernung zu den Systemen und/oder Antennen (20) für die Bestimmung von Einfallsrichtungen von elektromagnetischen Wellen angegeben wird.

3. Verfahren nach Anspruch 1 oder 2, wobei die Ist-Messwerte mindestens eine der folgenden Größen aufweisen: eine Einfallsrichtung, insbesondere Azimut und/oder Elevation und/oder Antennenempfindlichkeitsdaten, insbesondere eine Empfangsfeldstärke der elektromagnetischen Wellen des empfangenen Signals.

4. Verfahren nach einem der vorhergehenden Ansprüche, wobei der Schritt zum Positionieren der Sendeeinrichtung (11) die weiteren Schritte aufweist:
Senden von Steuerdaten durch eine Steuereinrichtung (33), die mit den Systemen und/oder den Antennen (20) verbunden ist, an das unbemannte Luftfahrzeug (10), und
Bewegen der Sendeeinrichtung (11) mittels des unbemannten Luftfahrzeuges (10) anhand der Steuerdaten zu dem vorgegebenen Ort.

5. Verfahren nach Anspruch 4, mit dem weiteren Schritt:
Bereitstellen der Steuerdaten durch die Messeinrichtung (30) an die Steuereinrichtung (33) basierend auf den Ist-Messwerten und/oder Ist-Parametern.

6. Verfahren nach einem der vorhergehenden Ansprüche, mit den weiteren Schritten:
Vergleichen der Ist-Messwerte mit Soll-Messwerten und/oder Vergleichen der Ist-Parameter mit Soll-Parametern für den vorgegebenen Ort der Sendeeinrichtung (11) und dem gesendeten Signal, und
Bestimmen von Funkbeschickungswerten, insbesondere Korrekturwerten und Kalibrierungskurven zum Korrigieren von Abweichungen der Ist-Messwerte von den Soll-Messwerten.

7. Verfahren nach einem der vorhergehenden Ansprüche, wobei das gesendete Signal eine Anzahl von Spektrallinien aufweist, die vorzugsweise einen definierten Frequenzabstand aufweisen.

8. System, insbesondere zum Durchführen eines Verfahrens gemäß einem der vorhergehenden Ansprüche, wobei das System aufweist:
eine Sendeeinrichtung (11) mit mindestens einer Sendeantenne (12), die an einem unbemannten Luftfahrtzeug (10), bevorzugt an einer Flugdrohne (10) angeordnet sind, wobei die Sendeeinrichtung (11) bzw. die Sendeantenne (12) an einem vorgegebenen Ort relativ zu Systemen und/oder Antennen (20) für eine Bestimmung von Einfallsrichtungen von elektromagnetischen Wellen, insbesondere Peilsystemen und/oder Peilantennen (20), positionierbar ist,
eine Messeinrichtung (30) zum Ermitteln von Ist-Messwerten und/oder Gewinnen von Ist-Parametern aus dem empfangenen Signal jeweils in Beziehung zu dem vorgegebenen Ort, und
eine Recheneinrichtung (32) zum Auswerten der Ist-Messwerte und/oder der Ist-Parameter.

9. System nach Anspruch 8, wobei die Recheneinrichtung (32) konfiguriert ist zum Vergleichen der Ist-Messwerte mit Soll-Messwerten und/oder Vergleichen der Ist-Parameter mit Soll-Parametern für den vorgegebenen Ort der Sendeeinrichtung (11) und dem gesendeten Signal, und insbesondere zum Ermitteln von Peilantennendaten und zum Berechnen von Peilantennenparametern der Peilsysteme und der Peilantennen (20).

10. System nach Anspruch 8 oder 9, wobei die Sendeeinrichtung (11) einen in der Frequenz abstimmbaren Signalgenerator oder vorzugsweise einen Eichmarkengeber in Verbindung mit einem Breitbandempfänger aufweist.

## Geänderte Patentansprüche

### Geänderte Patentansprüche gemäss Regel 137(2) EPÜ.

1. Verfahren zur automatischen Vermessung und/oder Gewinnung von Parametern von Peilsystemen und/oder Peilantennen (20) für eine Bestimmung von Einfallsrichtungen von elektromagnetischen Wellen, unter Verwendung einer Sendeeinrichtung (11), die an einem unbemannten Luftfahrzeug (10) angeordnet ist und die Signale sendet, mit den Schritten:
a) Positionieren der Sendeeinrichtung (11) unter Verwendung des unbemannten Luftfahrzeuges (10) an einem vorgegebenen Ort relativ zu den Peilsystemen und/oder Peilantennen (20),
b) Senden mindestens eines Signals durch die Sendeeinrichtung (11), das von den Peilsystemen und/oder Peilantennen (20) empfangbar ist,
c) Empfangen des von der Sendeeinrichtung (11) gesendeten Signals mit den Peilsystemen und/oder Peilantennen (20) für die Bestimmung von Einfallsrichtungen von elektromagnetischen Wellen,
d) Ermitteln von Ist-Messwerten und/oder Gewinnen von Ist-Parametern aus dem empfangenen Signal jeweils in Beziehung zu dem vorgegebenen Ort mittels einer Messeinrichtung (30),
e) Wiederholen der Schritte a) bis d) für mindestens einen weiteren vorgegebenen Ort,
f) Vergleichen der Ist-Messwerte mit Soll-Messwerten und/oder Vergleichen der Ist-Parameter mit Soll-Parametern für den vorgegebenen Ort der Sendeeinrichtung (11) und dem gesendeten Signal, und
g) Bestimmen von Funkbeschickungswerten, insbesondere Korrekturwerten und Kalibrierungskurven, zum Korrigieren von Abweichungen der Ist-Messwerte von den Soll-Messwerten.

2. Verfahren nach Anspruch 1, mit einem Schritt zum Bestimmen des vorgegebenen Ortes, vorzugsweise einer absoluten oder relativen Position der Sendeeinrichtung (11), insbesondere einer mit der Sendeeinrichtung (11) verbundenen Sendeantenne (12), sodass an diesem Ort optimale Abstrahleigenschaften der Sendeeinrichtung (11) zu den Peilsystemen und/oder Peilantennen (20) und/oder optimale Empfangsbedingungen für die Bestimmung von Einfallsrichtungen von elektromagnetischen Wellen vorhanden sind,
wobei die absolute Position vorzugsweise durch Ortskoordinaten, insbesondere GPS-Daten, angegeben wird und die relative Position vorzugsweise durch die Richtung und Entfernung zu den Peilsystemen und/oder Peilantennen (20) für die Bestimmung von Einfallsrichtungen von elektromagnetischen Wellen angegeben wird.

3. Verfahren nach Anspruch 1 oder 2, wobei die Ist-Messwerte mindestens eine der folgenden Größen aufweisen: eine Einfallsrichtung, insbesondere Azimut und/oder Elevation und/oder Antennenempfindlichkeitsdaten, insbesondere eine Empfangsfeldstärke der elektromagnetischen Wellen des empfangenen Signals.

4. Verfahren nach einem der vorhergehenden Ansprüche, wobei der Schritt zum Positionieren der Sendeeinrichtung (11) die weiteren Schritte aufweist:
Senden von Steuerdaten durch eine Steuereinrichtung (33), die mit den Peilsystemen und/oder Peilantennen (20) verbunden ist, an das unbemannte Luftfahrzeug (10), und
Bewegen der Sendeeinrichtung (11) mittels des unbemannten Luftfahrzeuges (10) anhand der Steuerdaten zu dem vorgegebenen Ort.

5. Verfahren nach Anspruch 4, mit dem weiteren Schritt:
Bereitstellen der Steuerdaten durch die Messeinrichtung (30) an die Steuereinrichtung (33) basierend auf den Ist-Messwerten und/oder Ist-Parametern.

6. Verfahren nach einem der vorhergehenden Ansprüche, wobei das gesendete Signal eine Anzahl von Spektrallinien aufweist, die vorzugsweise einen definierten Frequenzabstand aufweisen.

7. System, insbesondere zum Durchführen eines Verfahrens gemäß einem der vorhergehenden Ansprüche, wobei das System aufweist:
ein unbemanntes Luftfahrtzeug (10), bevorzugt eine Flugdrohne (10),
eine Sendeeinrichtung (11) mit mindestens einer Sendeantenne (12), die an dem unbemannten Luftfahrtzeug (10) angeordnet sind, wobei die Sendeeinrichtung (11) bzw. die Sendeantenne (12) unter Verwendung des unbemannten Luftfahrzeuges (10) an einem vorgegebenen Ort relativ zu Peilsystemen und/oder Peilantennen (20) für eine Bestimmung von Einfallsrichtungen von elektromagnetischen Wellen positionierbar ist,
ein Peilsystem und/oder eine Peilantenne (20) zum Empfangen des von der Sendeeinrichtung (11) gesendeten Signals für die Bestimmung von Einfallsrichtungen von elektromagnetischen Wellen,
eine Messeinrichtung (30) zum Ermitteln von Ist-Messwerten und/oder Gewinnen von Ist-Parametern aus dem empfangenen Signal jeweils in Beziehung zu dem vorgegebenen Ort, und
eine Recheneinrichtung (32) zum Auswerten der Ist-Messwerte und/oder der Ist-Parameter, wobei die Recheneinrichtung (32) konfiguriert ist zum Vergleichen der Ist-Messwerte mit Soll-Messwerten und/oder Vergleichen der Ist-Parameter mit Soll-Parametern für den vorgegebenen Ort der Sendeeinrichtung (11) und dem gesendeten Signal, und zum Bestimmen von Funkbeschickungswerten, insbesondere Korrekturwerten und Kalibrierungskurven, zum Korrigieren von Abweichungen der Ist-Messwerte von den Soll-Messwerten.

8. System nach Anspruch 7, wobei die Recheneinrichtung (32) konfiguriert ist zum Ermitteln von Peilantennendaten und zum Berechnen von Peilantennenparametern der Peilsysteme und der Peilantennen (20).

9. System nach Anspruch 7 oder 8, wobei die Sendeeinrichtung (11) einen in der Frequenz abstimmbaren Signalgenerator oder vorzugsweise einen Eichmarkengeber in Verbindung mit einem Breitbandempfänger aufweist.
